# EUROPEAN PATENT APPLICATION

(11) **EP 1 604 962 A2**
(43) Date of publication of application: **14.12.2005**
(21) Application number: 05253519.2
(22) Date of filing: 08.06.2005
(51) Int. Cl.: C04B 35/115, H01J 61/30

(54) **Translucent ceramic, a method of producing the same and discharge vessels**

(30) Priority: 10.06.2004 JP 2004172437; 11.11.2004 JP 2004327500; 27.05.2005 JP 2005154945
(71) Applicant: NGK INSULATORS, LTD., Nagoya-City, Aichi Pref. 467-8530 (JP)
(72) Inventor: Niimi, Norikazu, NGK Insulators, Ltd., IP Dept., Nagoya City, 467-8530 (JP)
(74) Representative: Paget, Hugh Charles Edward

(57) **Abstract**

An object of the present invention is to provide a method suitable for producing a translucent ceramic. A slurry containing a powdery raw material having a mean particle diameter of 0.3 µm or smaller, a dispersing medium and a gelling agent is cast into a mold and gelled to obtain a molded body. The molded body is then sintered. Preferably, the molded body is sintered under ambient pressure.

## Description

### BACKGROUND OF THE INVENTION

### 1. Field of the Invention

The present invention relates to a translucent ceramic and a method of producing the same.

### 2. Related Art Statement

For improving the luminance of a high pressure discharge lamp, it is required to improve the transparency of a discharge vessel so that the light from luminous substance inside of the discharge vessel can be emitted to the outside by reducing the absorption of light with a ceramic material forming the vessel. On the viewpoint, the discharge vessel has been formed of a translucent alumina having a high transparency in many cases up till now. It is also common to reduce the thickness of the discharge vessel made of a translucent alumina to result in an improvement of the transparency of the discharge vessel.

Such discharge vessel for a high pressure discharge lamp is described in, for example, Japanese patent publications 2002-141, 021A, 2002-164, 019A and 2002- 141, 022A. Further, WO 02/85590 discloses a technique of producing a discharge vessel of atypical shape and made of translucent alumina by gel cast molding.

Further, according to an article titled "Influences of particle diameter of crystal on transparency of alumina sintered body" in "Resources and Materials" 115 (1999) No. 6, pages 471 to 474, α- alumina fine powder (purity of 99.99 percent) having a mean particle diameter of 0.24 µm is used to produce a slurry, which is then subjected to slip casting to produce an alumina molded body. The alumina molded body is sintered to successfully produce a translucent alumina sintered body having a high strength. In the sintering step, the sintered body is subjected to hot isostatic pressing for 6 hours at an absolute temperature of 1523 K for removing fine pores left in the sintered body.

### SUMMARY OF THE INVENTION

According to the method of production disclosed in WO 02/85590, a translucent alumina body having an atypical shape can be obtained. It is desired, however, a translucent material such as translucent alumina having a still higher transparency. Further, according to the above article in "Resources and Materials", a high purity and ultra fine alumina powder having a mean particle diameter of 0.24 µm is sintered. Fine pores and defects are, however, found in a sintered body after sintering at ambient pressure so that a high transparency cannot be easily attained in such a body sintered at ambient pressure. The sintered body is thus sintered upon pressure by means of hot isostatic pressing so that the fine defects and pores are removed, the mean grain diameter is lowered and a high transparency can be successfully attained.

According to the pressurized sintered body produced by hot isostatic pressing, the grains can be made finer to improve the light transmittance of visual light. When the sintered body is used for a long time at a high temperature, the fine particles are gradually grown to lower the transparency. A solution is needed for the problem. On the other hand, the sintered body sintered at ambient pressure produced without hot isostatic pressing includes fine pores and defects left therein to result in a limitation of the improvement of the transparency.

An object of the present invention is to provide a method suitable for producing a ceramic having a high transparency.

The present invention provides a method of producing a translucent ceramic comprising the steps of:
casting a slurry comprising a powdery raw material having a mean particle diameter of 0.3 µm or smaller, a dispersing medium and a gelling agent and gelling said slurry to obtain a molded body; and
sintering said molded body.

The present invention further provides a translucent ceramic obtained by the above method.

The present inventor has found the followings. That is, ultra fine powder for a translucent ceramic having a mean particle diameter of 0.3 µm or smaller cannot be sufficiently and stably dispersed according to prior production methods (powder press, extrusion, casting etc.) so that defects such as pores are left in the sintered body to result in a limitation on the improvement of the transparency. Based on the findings, the inventors have tried to mold ultra fine powder having a mean particle diameter of 0.3 µm or smaller by means of gel cast molding. It is thus found that the powder can be stably and sufficiently dispersed to result in a high transparency even when a pressurized sintering process such as hot isostatic pressing is not applied. The present invention is based on the discovery.

According to the present invention, a slurry comprising a powdery raw material having a mean particle diameter of 0.3 µm or smaller, a dispersing medium and a gelling agent is cast and gelled to obtain a molded body, which is sintered to obtain a translucent ceramic.

The mean particle diameter of powdery raw material of a translucent ceramic is made 0.3 µm or smaller. The mean particle diameter is defined as a primary particle diameter. The lower limit of the mean grain diameter is not particularly limited. The mean particle diameter of the powdery raw material is decided according to the following procedure.
Direct observation of the powdery raw material by SEM (scanning electron microscope)
The measured value is defined as follows. Optional two visual fields are selected on a photograph taken by SEM at a magnitude of 30000. The mean particle diameter according to the present invention means an average of measured values of n = 500. The measured value is (a length of the longest axis + a length of the shortest axis)/2 of each primary particle (excluding secondary aggregates).

According to the present invention, it is found that such ultra fine ceramic powder is shaped with gel cast molding so that the dispersion and the stability of the dispersion of the ultra fine powder are improved. When the thus molded body is sintered to obtain a sintered body, pores and defects in the resulting sintered body are scarcely observed so that the transparency of the sintered body is considerably improved.
It is known that gel cast molding has been used for producing a discharge vessel having an atypical shape. The inventors have found that gel cast molding is particularly suitable for shaping the ultra fine powder and for improving the dispersion and stability of dispersion, so that it is possible to provide a sintered body having properties which have not been realized until now.

Particularly when a molded body is sintered at an ambient pressure, pores and defects are not proved to be present in the thus obtained sintered body so that the transparency of the sintered body is considerably improved. That is, a pressurized sintering process such as HIP has been applied so that fine pores and defects are removed. According to the present invention, it becomes possible to obtain a sintered body having substantially no fine pores and defects without applying such troublesome pressurized sintering process. The thus obtained sintered body has fine grains and is not produced by means of a pressurized sintering at a relatively low temperature, so that its room for the further growth of grains is reduced. The sintered body of the present invention exhibits superior effects that the grain growth is not observed when it is used at a high temperature of about 1200 °C for a long time, for example.

Although the mean grain diameter of the sintered body produced by the method of the present invention is not particularly limited, it may preferably be 0.8 µm or larger, and more preferably be 0.9 µm or larger and most preferably be 1.0 µm or larger. Further the mean grain diameter of the sintered body may preferably be 5.0 µm or smaller, more preferably be 3.5 µ m or smaller and most preferably be 3.0 µm or smaller.

According to the present invention, even when a ceramic is produced by sintering under ambient pressure, it is proved that a ceramic having a four point bending strength comparable with that produced by HIP method can be provided.

For example, according to "J. Am. Ceram. Soc." 86 (1) 12 to 18 pages, (2003), alumina having a strength of 709 MPa (four point bending strength at room temperature: mean grain diameter of 0.55 µm) was obtained by HIP method. On the contrary, alumina having a four point bending strength at room temperature of 731 MPa was obtained (mean grain diameter of 1.7 µm) by means of gel cast molding according to the present invention. Further, the alumina sintered body obtained by gel cast molding has a mean grain diameter of 1.7 µm, which exceeds three times of the mean grain diameter (0.55 µm) of the above alumina produced by HIP. Generally, as the mean grain diameter of the grains is large, the strength of the ceramic is lower. Considering the effects of the larger grains on a reduction of the strength in the ceramic according to the present invention, it is surprisingly found that the inventive ceramic has a strength considerably larger than that of the ceramic produced by HIP. As described above, despite of the fact that the grain diameter of the inventive ceramic is larger than that of the ceramic produced by HIP, the strength of the inventive ceramic is larger. Such results can be speculated that fine pores and defects are considerably reduced, for example to less than 0.1 percent (porosity), in the inventive ceramic according to gel cast molding applied onto the ultra fine powdery raw materials.

According to the ceramic of the present invention, the four point bending strength at room temperature of, for example alumina can be made 500 MPa or larger and more preferably 600 MPa or larger. The four point bending strength at 1200 °C can be also considerably improved to a value, for example, as large as 300 MPa or larger.
According to another embodiment, the raw material having a mean particle diameter of 0.1 µm was sintered at a temperature of 1500 °C for 1 hour at ambient pressure to successfully provide a sintered body having a porosity of less than 0.05 percent and a mean particle diameter of 1.0 µm. Such fine and dense microstructure have not be realized in the art by sintering at ambient pressure.
Based on the above discovery, the inventive ceramic can be used for forming a discharge vessel of a high pressure discharge lamp while maintaining a high mechanical strength at high temperature. It is thus possible to lower the wall thickness of the luminous portion of the discharge vessel (preferably to 0.25 to 0.6 µm and more preferably be 0.3 to 0.5 mm), while assuring a required mechanical strength at high temperature. The in-line transmittance and resistance against thermal shock in or near the luminous portion can be improved when the inventive ceramic is used for the discharge vessel for a lamp.

### BRIEF DESCRIPTION OF THE DRAWINGS

Fig. 1 is a longitudinal sectional view schematically showing an example of a discharge vessel 1A produced by the method of the present invention.
Fig. 2 is a longitudinal sectional view schematically showing an example of a high pressure discharge lamp produced using the discharge vessel 1A of Fig. 1.
Fig. 3 is a photograph taken by an electron microscope showing a ceramic microstructure of a sintered body according to the present invention.
Fig. 4 is a photograph taken by an electron microscope showing a ceramic microstructure of a sintered body according to the present invention.

The materials used as the translucent ceramic according to the present invention is not limited, and may preferably be alumina, yttria, YAG (yttrium-aluminum garnet) or quartz, and most preferably be translucent alumina. For example, it is preferred powdery raw material of high purity alumina powder having a purity of 99.9 percent or more (preferably 99.95 percent or more) to which 150 to 1000 ppm of an aid is added.

Such high purity alumina powder includes "TAIMICRON TM-D", "TAIMICRON TM-DR", "TAIMICRON TM-DA", "TAIMICRON TM-DAR" and "TAIMICRON TM-5D", which are high purity alumina powder manufactured by TAIMEI Chemicals Co.,Ltd.

The above described aid includes Zr02, Y2O3, La2O3 and Sc2O3 and is preferably magnesium oxide. When an organic dispersant is used, it is found that the addition of magnesium nitrate results in inhibition of the solidification of the slurry. The addition of the oxide such as magnesium oxide is thus preferred. When the nitrate is added, the solidification is not completed after 48 hours in the case that the solidification would be completed in 1 to 2 hours when the oxide is added. Further, if the mean particle diameter of the sintering aid exceeds 0.3 µm, the grain diameter of the sintered body may be fluctuated and the number of pores are increased. It is thus preferred to used a sintering aid having a mean particle diameter of 0.3 µm or smaller.

Gel cast molding process is a process for producing a molded body of power by casting a slurry containing ceramic powder, a dispersing medium and gelling agent and gelling the slurry by adjusting the temperature condition, addition of a crossing agent or the like so that the slurry is solidified.

In a preferred embodiment, gel cast molding process is carried out as follows.
(1) A gelling agent and ceramic powder are dispersed in a dispersing medium to produce a slurry. The gelling agent includes polyvinyl alcohol and a prepolymer such as an epoxy resin, phenol resin and urethane resin. The slurry is then supplied into a mold and subjected to three dimensional cross linking reaction with a cross linking agent to solidify the slurry.
(2) An organic dispersing medium having a reactive functional group and a gelling agent are chemically bonded with each other to solidify the slurry. The process is described in Japanese patent publication 2001-335371A (US publication 2002-0033565) and WO 02/85590.

According to the process (2), it is preferred to use an organic dispersing medium having two or more reactive functional groups. Further, 60 weight percent or more of the whole dispersing medium may preferably be occupied by an organic dispersing medium having a reactive functional group.

The organic dispersing medium having a reactive functional group may preferably have a viscosity of 20 cps or lower at 20 °C. The gelling agent may preferably have a viscosity of 3000 cps or lower at 20 °C. Specifically, it is preferred to react the organic dispersing medium having two or more ester bonds with the gelling agent having an isocyanate group and/or an isothiocyanate group to solidify the slurry.

The organic dispersing medium satisfies the following two conditions.
(1) The medium is a liquid substance capable of chemically reacting with the gelling agent to solidify the slurry.
(2) The medium is capable of producing the slurry with a high liquidity for the ease of supply into the mold.

The organic dispersing medium necessarily has a reactive functional group, such as hydroxyl, carboxyl and amino groups, in the molecule, capable of reacting with the gelling agent in the molecule for solidifying the slurry.

The organic dispersing medium has at least one reactive functional group. The organic dispersing medium may preferably have two or more reactive functional groups for accelerating the solidification of the slurry.

The liquid substance having two or more reactive functional groups includes a polyalcohol (for example, a diol such as ethylene glycol, a triol such as glycerol or the like) and polybasic acid (dicarboxylic acid or the like).

The reactive functional groups in the molecule may be the same or different kind of functional groups with each other. Further, many reactive functional groups may be present such as polyethylene glycol.

On the other hand, when a slurry of a high liquidity suitable for casting produced, it is preferred to use a liquid substance having a viscosity as low as possible. The substance may preferably have a viscosity of 20 cps or lower at 20 °C.

The above polyalcohol and polybasic acid may have a high viscosity due to the formation of hydrogen bonds. In this case, even when the polyalcohol or polybasic acid is capable of solidifying the slurry, they may not be suitable as the reactive dispersing medium. In this case, it is preferred to use, as the organic dispersing medium, an ester having two or more ester bonds such as a polybasic ester (for example, dimethyl glutarate), or acid ester of a polyalcohol (such as triacetin). Further, a polyalcohol or a polybasic acid may be effectively used for improving the strength of the gel as far as it is used in an amount of not considerably increasing the viscosity.

Although an ester is relatively stable, it has a low viscosity and may easily react with the gelling agent having a high reactivity. Such ester may satisfy the above two conditions. Particularly, an ester having 20 or lower carbon atoms have a low viscosity, and may be suitably used as the reactive dispersing medium.

In the embodiment, a non-reactive dispersing medium may be also used. The dispersing medium may preferably be an ether, hydrocarbon, toluene or the like.

Further, when an organic substance is used as the non-reactive dispersing medium, preferably 60 weight percent or more, more preferably 85 weight percent or more, of the whole dispersing medium may be occupied by the reactive dispersing medium for assuring the reaction efficiency with the gelling agent.
The reactive dispersing medium and gelling agent are described in Japanese patent publication 2001-335371A (US publication 2002-0033565) and WO 02/85590.

Specifically, the reactive gelling agent is a substance capable of reacting with the dispersing medium to solidify the slurry. The gelling agent of the present invention may be any substances, as long as it has a reactive functional group which may be chemically reacted with the dispersing medium. The gelling agent may be a monomer, an oligomer, or a prepolymer capable of cross linking three-dimensionally such as polyvinyl alcohol, an epoxy resin, phenol resin or the like.

The reactive gelling agent may preferably have a low viscosity of not larger than 3000 cps at 20 °C for assuring the liquidity of the slurry.

A prepolymer or polymer having a large average molecular weight generally has a high viscosity. According to the present invention, a monomer or oligomer having a lower molecular weight, such as an average molecular weight (GPC method) of not larger than 2000, may be preferably used.
Further, the "viscosity" means a viscosity of the gelling agent itself (viscosity of 100 percent gelling agent) and does not mean the viscosity of a commercial solution containing a gelling agent (for example, viscosity of an aqueous solution of a gelling agent).

The reactive functional group of the gelling agent may be selected considering the reactivity with the reactive dispersing medium. For example, when an ester having a relatively low reactivity is used as the reactive dispersing medium, the gelling agent having a highly reactive functional group such as an isocyanate group (-N=C=O) and/or an isothiocyanate group (-N=C=S) may be preferably used.

An isocyanate group is generally reacted with an diol or diamine. An diol generally has, however, a high viscosity as described above. A diamine is highly reactive so that the slurry may be solidified before the supply into the mold.

Taking such a matter into consideration, a slurry is preferable to be solidified by reaction of a reactive dispersion medium having ester bonds and a gelling agent having an isocyanate group and/or an isothiocyanate group. In order to obtain a further sufficient solidified state, a slurry is more preferable to be solidified by reaction of a reactive dispersion medium having two or more ester bonds and a gelling agent having isocyanate group and/or an isothiocyanate group. Further, a diol or diamine may be effectively used for improving the strength of the gel as far as it is used in an amount of not considerably increasing the viscosity.

Examples of the gelling agent having isocyanate group and/or isothiocyanate group are MDI (4,4'-diphenylmethane diisocyanate) type isocyanate (resin), HDI (hexamethylene diisocyanate) type isocyanate (resin), TDI (tolylene diisocyanate) type isocyanate (resin), IPDI (isophorone diisocyanate) type isocyanate (resin), and an isothiocyanate (resin).

Additionally, other functional groups may preferably be introduced into the foregoing basic chemical structures while taking the chemical characteristics such as compatibility with the reactive dispersion medium and the like into consideration. For example, in the case of reaction with a reactive dispersion medium having ester bonds, it is preferable to introduce a hydrophilic functional group from a viewpoint of improvement of homogeneity at the time of mixing by increasing the compatibility with esters.

Further, reactive functional groups other than isocyanate and isothiocyanate groups may be introduced into a molecule, and isocyanate group and isothiocyanate group may coexist. Furthermore, as a polyisocyanate, a large number of reactive functional groups may exist together.

The slurry for molding may be produced as follows.
(1) The ceramic ultra fine powder is dispersed into the dispersing medium to produce slurry, into which the gelling agent is added.
(2) The ceramic ultra fine powder and gelling agent are added to the dispersing medium at the same time to produce the slurry.

The slurry may preferably have a viscosity at 20 °C of 30000 cps or less, more preferably 20000 cps or less, for improving the workability when the slurry is filled into a mold. The viscosity of the slurry may be adjusted by controlling the viscosity of the aforementioned reactive dispersing medium and gelling agent, the kind of the powder, amount of the dispersing agent and concentration of the slurry (weight percent of the powder based on the whole volume of the slurry).

If the concentration of the slurry is too low, however, the density of the molded body is reduced, leading to a reduction of the strength of the molded body, crack formation during the drying and sintering steps and deformation due to an increase of the shrinkage. Normally, the concentration of the slurry may preferably be in a range of 25 to 75 volume percent, and more preferably be in a range of 35 to 75 volume percent, for reducing cracks due to the shrinkage during the drying step.

Further, various additives may be added to the slurry for molding. Such additives include a catalyst for accelerating the reaction of the dispersing medium and gelling agent, a dispersing agent for facilitating the production of the slurry, an anti-foaming agent, a detergent, and a sintering aid for improving the properties of the sintered body.

It is further found that the strength of the molded body produced from the slurry can be considerably improved by incorporating some moisture content into the slurry.

It has been generally considered to add a compound having a plurality of functional groups (such as hydroxyl and amino groups) to the slurry for improving the strength of the molded body. The compounds having a plurality of functional groups can be polymerized to improve the strength of the molded body. According to the present embodiment, however, it was proved, beyond expectations, that water without a plurality of functional groups contributes to an improvement of the strength of the molded body. The findings are epoch-making.

According to the present embodiment, ceramic powder before formulating the slurry may contain moisture content, and/or, water may be added to dried powdery raw material, and/or, water may be added during the formulation of slurry. It is preferred, however, that the ceramic powder before formulating the slurry contains moisture content for further improving the strength of the molded body.

Specifically, in the slurry, the total moisture content of the slurry may preferably be 0.03 weight parts or more with respect to 100 weight parts of the powdery raw material. The total moisture content is the sum of a moisture content (including crystal water and absorbed water) contained in the powdery raw material before the formulation of the slurry and moisture content added to the raw material when the slurry is formulated.

On the viewpoint, the total moisture content of the slurry may preferably be 0.06 weight parts or higher and more preferably be 0.1 weight parts or higher.

The upper limit of the moisture content of the slurry is not particularly defined. If the moisture content is too high, however, the rate of the solidification may be too high so that the solidification tends to be started before the completion of the molding process. On the viewpoint of avoiding this problem, the total moisture content of the slurry may preferably be 3.0 weight parts or lower.

According to a preferred embodiment, the molded body is sintered under reducing atmosphere. The reducing atmosphere may representatively be hydrogen and may include an inert gas.

The sintering temperature is to be decided depending on the material. According to a preferred embodiment, however, the maximum temperature during the sintering step may be 1750 °C or lower.

The lower limit of the sintering temperature is not also defined and may be selected depending on the material to be sintered. The sintering temperature may be, for example, 1350 °C or higher and more preferably be 1450 °C or higher. Further, the atmosphere may be appropriately humidified (to a dew point of minus 10 °C to plus 10°C) depending on the desired color tone of the sintered body (for example, blackening).

Further in a preferred embodiment, the molded body may be dewaxed at a temperature of 1000 °C or higher and 1200 °C or lower and then sintered. The dewaxing may preferably be performed in air. In this case, air or oxygen may be introduced into a furnace, if required, for preventing oxygen deficiency in the furnace.

Organic components in the molded body produced by gel cast molding is more difficult to decompose than that in a molded body obtained by conventional shaping methods (powder pressing or extrusion). The dewaxing step is thus effective for the acceleration of the decomposition of the organic components and for preventing the blackening of the resulting sintered body. Although the duration of time for the dewaxing step is not limited, the duration of time may preferably be 30 hours or longer and more preferably be 60 hours or longer.

Further, the sintered body may by annealed at a temperature of 1000 to 1500 °C in air depending on the desired color tone (for example, blackening) of the sintered body. During the annealing step, air or oxygen may be supplied into a furnace, if required, for preventing oxygen deficiency in the furnace.

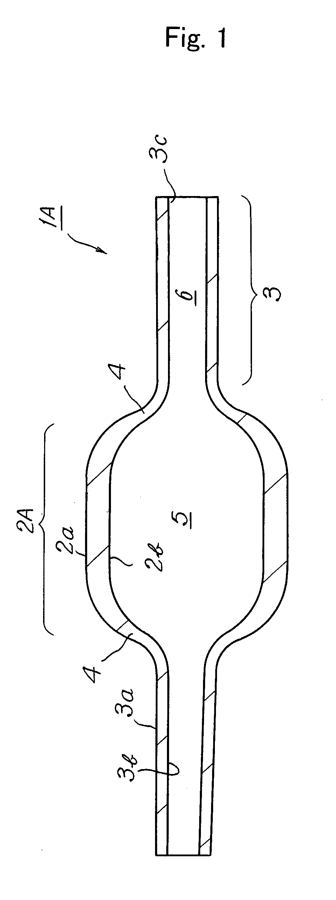

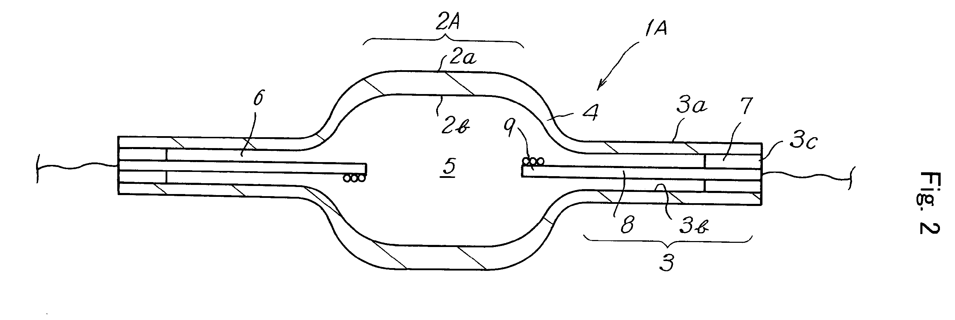

Fig. 1 is a longitudinal sectional view schematically showing an example of a discharge vessel 1A produced according to the present invention. Fig. 2 is a longitudinal sectional view schematically showing a high pressure discharge lamp using the discharge vessel 1A of Fig. 1.

A luminous discharge vessel 1A has a cylindrical shaped central luminous portion 2A, a pair of tube-shaped end portions 3 provided at both ends of the central luminous portion 2A, and a pair of connecting portions 4 connecting the central luminous portion 2A and the end portions 3, respectively. An inner space 5 inside of the central luminous portion 2A and inner spaces 6 inside of the end portions 3 are communicated with each other. 2a represents the outer surface of the central luminous portion 2A, 2b represent the inner surface of the central luminous portion 2A, 3a represents the outer surface of the end portion 3 and 3b represents the inner surface of the end portion 3.

Fig. 2 is a longitudinal sectional view schematically showing an example of design of a high pressure discharge lamp using the discharge vessel of Fig. 1. A conductive member 8 is fixed near an opening 3c of the end portion 3 of the discharge vessel 1A with a sealing glass 7. An electrode system 9 is fixed at the end of the conductive member 8. Ionizable luminous substance and a starter gas are filled in the inner spaces 5 and 6 so that discharge arc is generated between a pair of the electrode members 9.

Materials for the conductive members may preferably be a pure metal selected from the group consisting of tungsten, molybdenum, rhenium and tantalum, or an alloy of two or more metals selected from the group consisting of tungsten, molybdenum, rhenium and tantalum, or a cermet composed of the pure metal or the alloy and a ceramic selected from the group consisting of alumina, yttria and quartz. The conductive cermets are advantageous among the above materials, because the conductive cermets may contribute to a reduction of the difference of thermal expansion coefficients of the conductive material and the ceramic discharge vessel to be sealed, so that the thermal stress can be reduced.

The sealing glass may preferably be a mixture of two or more ceramic selected from the group consisting of alumina, yttria, quartz and a rare earth oxide.

In the case of a metal halide high pressure discharge lamp, an inert gas such as argon and xenon and a metal halide, as well as mercury or a zinc metal if required, are filled in the inner space of the discharge vessel.

The high pressure discharge lamp of the invention may be applied to various kinds of lighting systems, including a head lamp for automobile, an OHP (over head projector) and liquid crystal projector.

Further, the translucent ceramic according to the present invention may be applied, for example, to the following applications.

A structure in a heat cycle engine requiring resistance against heat shock
Window for visual observation of high temperature furnace or the like

### EXAMPLES

500 ppm of magnesium oxide powder was added to high purity alumina powder having a purity of 99.99 percent or higher, a BET specific surface area of 9 to 15 m²/g and a tap density of 0.9 to 1.0 g/cm³ to produce powdery raw material. The powdery raw material was shaped by means of gel cast molding.

Specifically, 100 weight parts of the powdery raw material, 40 weight parts of dispersing medium (dimethyl grutarate : triacetin = 90:10: weight ratio), 4 to 5 weight parts of gelling agent (modified compound of 4,4'-diphenyl methane diisocyanate), 3 weight parts of dispersing agent (a copolymer of maleic acid) and 0.1 to 0.3 weight parts of a reaction catalyst (triethylamine) were mixed. Specifically, the powdery raw material was added to the dispersing medium at 20 °C to disperse the raw material, and the gelling agent was then added to the dispersing medium, and the reaction catalyst was finally added to produce a slurry. The slurry had a viscosity of 300 cps.

The thus obtained slurry was injected into a mold and left for 2 hours for completing the gelling. A molded body obtained by the gelling was removed from the mold, dried at a temperature of 60 to 100 °C, and dewaxed at 1100 °C for 2 hours. The sintering of the molded body was performed in 100 percent dry hydrogen atmosphere at the maximum temperature enabling the highest light transmittance in each sample produced from each powdery raw material having each mean particle diameter. The sintered body was then annealed in air 1200 °C for 5 hours.

Further, as a comparative example, the powdery raw material was used to produce a press molded body, which was sintered to obtain a sintered body. The sintered body was mirror finished to a thickness of 0.5 mm and subjected to measurement of light transmittance by means of "U-3400" manufactured by HITACHI. The measurement was performed at a wavelength of 700 nm. A sample having an in-line transmittance of 25 percent or more was classified as good. The results of the measurement were shown in table 1.

**Table 1**

| | | | | | | |
|---|---|---|---|---|---|---|
| Mean particle diameter of raw material (µm) | | 0.1 | 0.2 | 0.3 | 0.4 | 0.6 |
| Gel cast molding | Linear Transmittance (%) | 40 | 35 | 30 | 20 | 20 |
| Press molding | | Lower than 5 | Lower than 5 | 10 | 20 | 20 |

As can be seen from the results of table 1, when the mean particle diameter of the raw material is 0.3 µm or smaller, the in-line transmittance is improved to 30 to 40 percent which are surprisingly high. The transmittance can be considerably improved by lowering the mean particle diameter of the raw material to a value of 0.3 µm or lower, compared with those when the mean particle diameter is 0.4 or 0.5 µm. Contrary to this, in the case of press molding, the in-line transmittance of the sintered body is considerably reduced when the mean particle diameter of the raw material is 0.3 µm or lower.

### (Experiment 2)

Sintered bodies were produced according to the same procedure as the experiment 1, except the following conditions, to measure the in-line transmittance of the thus obtained sample.

The mean particle diameter of the raw material was made 0.2 µm, and the temperature for the dewaxing of the molded body after drying was changed as shown in table 2. The keeping time for the dewaxing was 2 hours. The sintering was performed in 100 percent dry hydrogen atmosphere at 1700 °C for 1 hour and the annealing was performed in air at 1200 °C for 5 hours. The sintered body was mirror finished to a thickness of 0.5 mm and subjected to measurement of light transmittance by means of "U-3400" manufactured by HITACHI. The measurement was performed at a wavelength of 700 nm. The results of the measurement were shown in table 2.

**Table 2**

| | | | | | |
|---|---|---|---|---|---|
| Dewaxing temperature (°C) | 900 | 1000 | 1100 | 1200 | 1300 |
| Linear Transmittance (%) | 15 | 30 | 35 | 30 | 20 |

As described above, the in-line transmittance can be more improved by adjusting the dewaxing temperature in a range of 1000 to 1200 °C.

Substantially the same experiments as described above were performed for the raw materials having mean particle diameters of 0.3 and 0.1 µm, respectively, and substantially the same results were obtained.

### (Experiment 3)

The green molded body same as that described in the experiment 1 was tested according to the same procedure except that the sintering temperature was changed. The mean particle diameter of the raw material was 0.2 µm. The sintered body was kept at the maximum temperature for 2 hours in the dewaxing step. The sintering was performed in 100 percent dry hydrogen at a keeping time of 1 hour and the annealing was performed in air at 1200 °C for 5 hours. The other conditions for the evaluation were the same as the experiment 1. Further, table 3 shows the four point bending strengths at room temperature and at 1200 °C and the mean grain diameter of the sintered body. The measurements were performed as follows.

### (Four point bending strength of sintered body at room temperature)

According to JIS R1601
(Four point bending strength at 1200 °C)

According to JIS R1604
(Mean particle diameter of powdery raw material)

It is measured by direct observation using SEM.
(Mean grain diameter of sintered body)

Calculated according to Intercept method

**Table 3**

| | | | | | | | |
|---|---|---|---|---|---|---|---|
| Sintering Temperature (°C) | 1500 | 1520 | 1550 | 1600 | 1650 | 1750 | 1780 |
| Linear Transmittance (%) | Lower Than 5 | 25 | 27 | 35 | 30 | 25 | 15 |
| Four point bending Strength (Room temperature) (MP a) | 220 | 519 | 731 | 696 | 620 | 531 | 435 |
| Four point bending Strength (1200°C) (MPa) | 124 | 372 | 510 | 485 | 430 | 306 | 183 |
| Mean particle Diameter (µm) | 1.2 | 1.4 | 1.7 | 2.2 | 2.7 | 6.2 | 18.0 |

As described above, in the case of translucent alumina produced from the powdery raw material having a mean particle diameter of 0.2 µm, it is proved that the optimum range of sintering temperature is from 1520 to 1750 °C.

### (Experiment 4)

Sintered bodies were produced according to the same procedure as the experiment 1, except that the mean particle diameter of the raw material was 0.1 µm and the maximum temperature during the sintering step of the green molded body after drying was changed as shown in table 4. The keeping time period for the dewaxing was 2 hours. The sintering was performed in 100 percent dry hydrogen for a holding time of 1 hour, and the annealing was performed in air at 1200 °C for 5 hours.

**Table 4**

| | | | | | | | |
|---|---|---|---|---|---|---|---|
| Sintering Temperature (°C) | 1350 | 1430 | 1450 | 1500 | 1550 | 1600 | 1650 |
| Mean grain diameter (µm) | Not mesurable | 0.7 | 0.8 | 1.0 | 1.4 | 2.0 | 3.0 |
| Linear Transmittance (%) | Lower Than 5 | 20 | 25 | 40 | 35 | 30 | 20 |

As described above, in the case of translucent alumina produced from the raw material having a mean particle diameter of 0.1 µm, it is proved that the optimum range of the sintering temperature was 1450 to 16050 °C. When the sintering was performed at 1500 °C for 1 hour, it was proved that the resulting sintered body had a mean grain diameter of 1.0 µm and a porosity of lower than 0.05 percent. It was also found that the sintered body had fine crystal grains and extremely dense microstructure. The in-line transmittance was proved to be as high as 40 percent.

### (Experiment 5)

Sintered bodies were produced according to the same procedure as the experiment 1, except that the mean particle diameter of the raw material was 0. 2 µm and the green molded body after drying was held at 1200 °C for 2 hours. The sintering was performed in 100 percent dry hydrogen at 1700 °C for 1 hour and the annealing was performed in air for 5 hours. The annealing temperature was changed as shown in table 5. The thus obtained sintered body was mirror finished to a thickness of 0.5 mm and subjected to measurement of light transmittance by means of "U-3400" manufactured by HITACHI. The results of the measurement were shown in table 5.

**Table 5**

| | | | | | | | |
|---|---|---|---|---|---|---|---|
| Annealing Temperature (°C) | No Annealing | 900 | 1000 | 1200 | 1400 | 1500 | 1600 |
| Linear Transmittance (%) | 8 | 15 | 30 | 35 | 30 | 25 | 15 |

As can be seen from table 5, it is proved that the in-line transmittance can be further improved by performing the annealing at a temperature in a range of 1000 to 1500 °C.

The same test was performed using the raw material having a mean particle diameter of 0.1 µm and substantially the same results were obtained.

### (Experiment 6)

In the experiment 1, the organic dispersing medium for alumina was replaced with more commonly used aqueous dispersing medium, and the mean particle diameter of the powdery raw material was set at 0.2 µm. The dewaxing was performed at 1100 °C, the sintering was performed at 1650 °C and the annealing was performed at 1200 °C. The thus obtained sintered bodies were measured for the in-line transmittances.

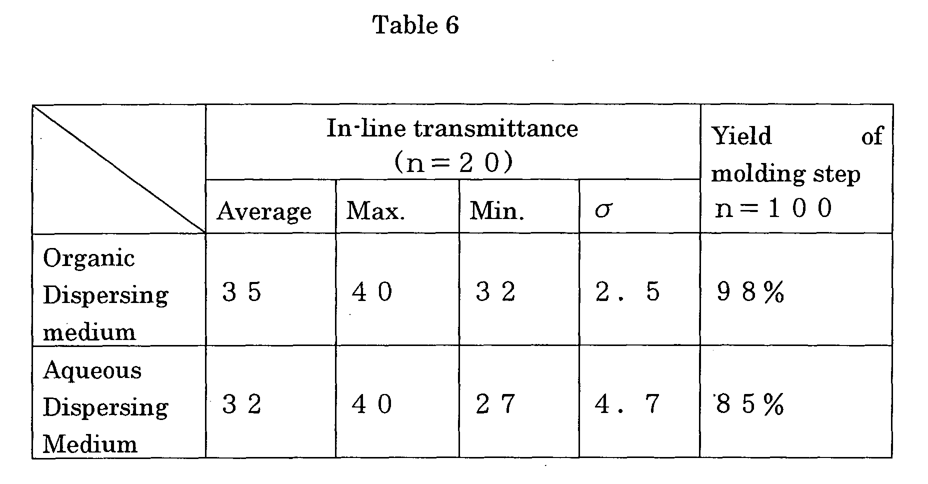

As can be seen from table 6, the average values seem to be not considerably different from each other for the above two kinds of dispersing media. When the deviation of the values in 20 samples was compared, the deviation was smaller in the case of using organic dispersing medium. Such result may be speculated that aqueous dispersing medium is more sensitive to a pH change to result in unidentified deviation in the properties of the slurry. Further, defects of crack formation during the drying step was observed (cracks are considered to be generated due to the difference of shrinkage rates of the inner and outer parts of the molded body). The yield in molding step relating to the crack defect was proved to be 98 percent in the case of using the organic dispersing medium, and 85 percent in the case of using the aqueous dispersing medium. As can be seen from the results, the gel cast molding process using an organic dispersing medium is preferred.

### (Experiment 7)

Further, sintered bodies were produced according to the procedure of the experiment 1 using the organic dispersing medium and alumina powder having a mean particle diameter of 0.2 µm, under the conditions that the dewaxing temperature was 1100 °C, the sintering temperature was 1650 °C, and the mean particle diameter of magnesium oxide (sintering additive) was changed in a range of 0.1 to 0.6 µm.

**Table 7**

| | | | | | | |
|---|---|---|---|---|---|---|
| Mean particle Diameter of MgO | 0.1 | 0.2 | 0.3 | 0.4 | 0.5 | 0.6 |
| Linear Transmittance (%) | 35 | 30 | 25 | 20 | 15 | 15 |

As can be seen from table 7, it is preferred that the mean particle diameter of magnesium oxide is 0.3 µm or smaller.

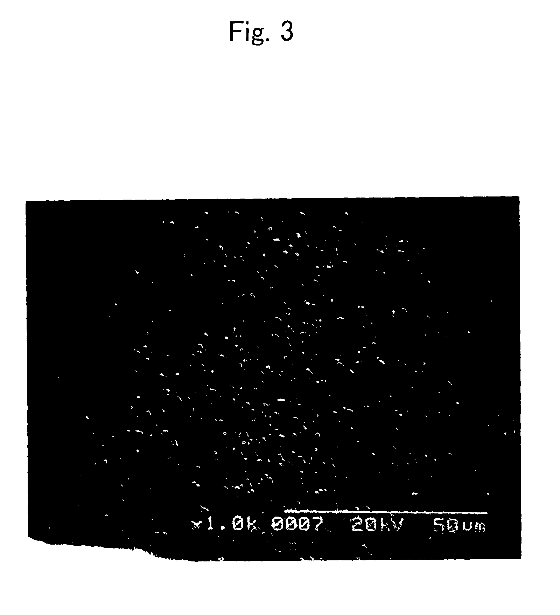

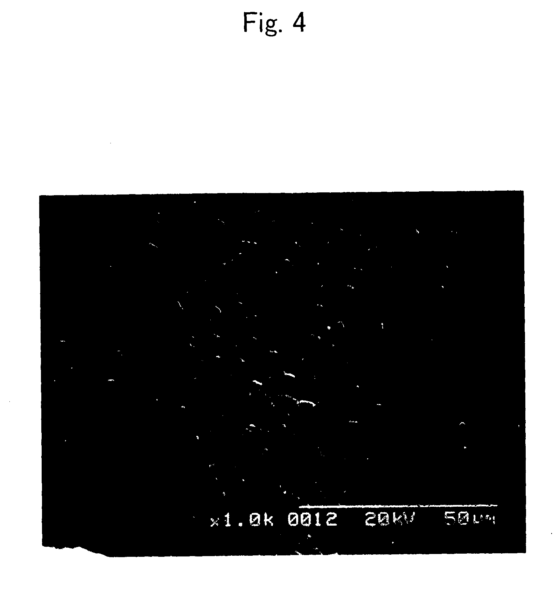

Fig. 3 shows a photograph taken by an electron microscope of the sintered body of the experiment 1 produced using the raw material having a mean particle diameter of 0.1 µm. The mean grain diameter of the sintered body was proved to be 1.8 µm. Fig. 4 shows a photograph taken by an electron microscope of the sintered body of the experiment 1 produced using the raw material having a mean particle diameter of 0.2 µm. The mean grain diameter of the sintered body was proved to be 4.2 µm. It is noted that a high in-line transmittance was obtained even when the mean grain diameter of the sintered body is as large as 4.2 µm.

### (Experiment 8)

Slurry was produced according to the same procedure as the experiment 1 and cast into a mold, which was held for 2 hours to complete the gelling. The gelled molded body was removed from the mold and dried at 60 to 100 °C. The diameter φ and length of the thus obtained rod like molded body were 10 mm and 50 mm, respectively. The molded body was left for 100 hours and the transverse strength (breaking load) was measured. The results were shown in table 8.

In the above process, the powdery raw material was pre-heated before the mixing of the slurry for controlling the moisture content of the powdery raw material. Generally, when alumina powder is heated at about 450 °C, its moisture content is reduced to zero (Dictionary of Physicochemistry: item "Aluminum oxide"). The powdery raw material was pre-heated at 600 °C to assure that the moisture content is reduced to zero. The temperature of the pre-heating was variously changed to control the moisture content of the powdery raw material as shown in table 8. That is, the moisture content shown in table 8 is a moisture content contained in the powdery raw material before the formulation of slurry (including both of crystal water and absorbed water).

**Table 8**

| | | | | | |
|---|---|---|---|---|---|
| Moisture Content | 0 | 0.03 | 0.1 | 0.2 | 0.7 |
| Breaking Load (kg) | 1.3 | 2.0 | 2.3 | 2.8 | 3.5 |
| Judgement | × | ○ | ○ | ⓞ | ⓞ |

As shown in table 8, the strength of the molded body can be considerably improved by increasing the moisture content of the powdery raw material to a value of 0.03 weight parts or larger.

### (Experiment 9)

Slurry was produced according to the same procedure as the experiment 1 and cast into a mold, which was held for 2 hours to complete the gelling. The gelled molded body was removed from the mold and dried at a temperature of 60 to 100 °C. The diameter φ and length of the thus obtained rod-like molded body were 10 mm and 50 mm, respectively. The molded body was left for 100 hours and the transverse strength (breaking load) was measured. The results were shown in table 9.

The powdery raw material was pre-heated at 600 °C to assure that the moisture content is 0 weight parts. Water was added to the powdery raw material with zero moisture content, direct before the raw material was mixed with a dispersing medium etc., to produce slurry. That is, the "moisture content" shown in table 9 is the moisture content added to the powdery raw material direct before the formulation of the slurry.

**Table 9**

| | | | | | |
|---|---|---|---|---|---|
| Moisture Content | 0 | 0.03 | 0.06 | 0.15 | 0. 3 |
| Breaking Load (kg) | 1. 3 | 1. 7 | 2. 0 | 2. 3 | 2. 6 |
| Judgement | × | ○ | ○ | ○ | ⓞ |

As shown in table 9, the strength of the molded body can be considerably improved by increasing the moisture content of the slurry to a value of 0.03 weight parts or larger.

### (Experiment 10)

As described above, the inventive sintered body exhibits a large strength at high temperature judging from the results of the experiment 3. Based on the findings, the resistance against thermal shock was evaluated according to the following test procedure.

Discharge vessels for a high pressure discharge lamp of a rated power input of 35 W were prepared. The discharge vessels have central luminous portions having wall thicknesses of 0.2, 0.25, 0.3, 0.5, 0.6 0.7 and 0.8 mm (normal thickness), respectively. Switching cycle test of 100 cycles was performed to evaluate the maximum excessive load input that the discharge vessel can endure. Each switching cycle is composed of on time of 1 minute and successive off time of 1 minute. As shown in table 10, considerable effects can be obtained for the discharge vessels having a normal thickness of 0.25 to 0.6 mm.

**Table 10**

| | | | | | | | |
|---|---|---|---|---|---|---|---|
| Thickness of Central luminous portion (mm) | 0.2 | 0.25 | 0.3 | 0.5 | 0.6 | 0.7 | 0.8 (normal thickness) |
| Maximum rated power input passing switching cycle test (W) | 40 | 45 | 50 | 50 | 45 | 40 | 40 |

The present invention has been explained referring to the preferred embodiments. However, the present invention is not limited to the illustrated embodiments which are given by way of examples only, and may be carried out in various modes without departing from the scope of the invention.

## Claims

1. A method of producing a translucent ceramic comprising the steps of:
casting a slurry comprising a powdery raw material having a mean particle diameter of 0.3 µm or smaller, a dispersing medium and a gelling agent and gelling said slurry to obtain a molded body; and
sintering said molded body.

2. The method of claim 1, wherein said molded body is sintered at ambient pressure.

3. The method of claim 1 or 2, wherein said translucent ceramic comprises translucent alumina.

4. The method of any one of claims 1 to 3, wherein said molded body is sintered under reducing atmosphere.

5. The method of any one of claims 1 to 4, wherein the maximum temperature during said sintering step is 1750 °C or lower.

6. The method of any one of claims 1 to 5, further comprising the step of dewaxing said molded body at a temperature of 1000 °C or higher and 1200 °C or lower before said sintering step.

7. The method of any one of claims 1 to 6, further comprising the step of annealing said sintered body.

8. The method of any one of claims 1 to 7, wherein said dispersing medium comprises an organic dispersing medium having a reactive functional group, so that said organic dispersing medium and said gelling agent are chemically bonded with each other for gelling said slurry.

9. The method of claim 8, wherein said dispersing medium comprises at least one medium selected from the group consisting of an ester of polybasic acid and an acid ester of a polyalcohol.

10. The method of claim 9, wherein said dispersing medium comprises dimethyl glutarate.

11. The method of any one of claims 8 to 10, wherein said gelling agent comprises an isocyanate group and/or an isothiocyanate group.

12. The method of any one of claims 8 to 11, wherein said slurry further comprises a dispersing agent comprising a copolymer of maleic acid.

13. The method of any one of claims 8 to 12, wherein said slurry further comprises a sintering additive in a form of an oxide having a mean particle diameter of 0.3 µm or smaller.

14. The method of claim 13, wherein said translucent ceramic comprises polycrystalline alumina and said sintering additive comprises magnesium oxide.

15. The method of any one of claims 1 to 14, wherein said slurry comprises a total moisture content of 0.03 weight parts or higher with respect to 100 weight parts of said powdery raw material.

16. The method of claim 15, wherein said powdery raw material comprises water.

17. The method of any one of claims 14 to 16, wherein said translucent polycrystalline alumina ceramic has a four point bending strength at room temperature of 500 MPa or higher.

18. The method of any one of claims 14 to 17, wherein said translucent polycrystalline alumina ceramic has a four point bending strength at 1200 °C of 300 MPa or higher.

19. A translucent ceramic obtained by the method of any one of claims 1 to 18.

20. A discharge vessel comprising said translucent ceramic of claim 19.
